# EUROPÄISCHE PATENTSCHRIFT

(11) **EP 3 977 093 B1**
(45) Veröffentlichungstag und Bekanntmachung des Hinweises auf die Patenterteilung: **31.07.2024**
(21) Anmeldenummer: 20719611.4
(22) Anmeldetag: 15.04.2020
(51) Int. Cl.: G01N 21/15

(54) **KRAFTFAHRZEUG-SENSORVORRICHTUNG MIT ROTIERENDER SCHUTZSCHEIBE**
MOTOR-VEHICLE SENSOR APPARATUS COMPRISING A ROTATING PROTECTIVE SCREEN
DISPOSITIF CAPTEUR DE VÉHICULE AUTOMOBILE, COMPORTANT UN ÉCRAN DE PROTECTION ROTATIF

(30) Priorität: 27.05.2019 DE 102019114145
(43) Veröffentlichungstag der Anmeldung: 06.04.2022
(73) Patentinhaber: Kautex Textron GmbH & Co. KG, 53229 Bonn (DE)
(72) Erfinder: STELL, Björn, 51429 Bergisch Gladbach (DE); SCHICHLEIN, Hilmar, 53919 Weilerswist (DE); DRESCHERS, Daniel, 53721 Siegburg (DE)
(74) Vertreter: Richly & Ritschel Patentanwälte PartG mbB
(86) Internationale Anmeldenummer: PCT/EP2020/060580
(87) Internationale Veröffentlichungsnummer: WO 2020/239317

(56) Entgegenhaltungen:
- DE-A1- 102004 011 091
- DE-A1- 102018 210 771
- GB-A- 2 560 639
- US-A1- 2002 139 394
- US-A1- 2017 056 932

## Beschreibung

Die vorliegende Erfindung betrifft eine Sensorvorrichtung für ein Kraftfahrzeug. Ferner betrifft die vorliegende Erfindung ein Verfahren zum Reinigen einer Sensorvorrichtung für ein Kraftfahrzeug.

Sensorvorrichtungen für Kraftfahrzeuge sind hinlänglich bekannt. Beispielsweise sind als Kamerasysteme ausgebildete Sensorvorrichtungen bekannt, die beispielsweise als Front-, Rück- oder Seitenkameras ausgebildet sein können, um die Umgebung eines Kraftfahrzeugs beispielsweise bei einem Parkvorgang des Kraftfahrzeugs zu überwachen. Ferner finden Sensorvorrichtungen zur Überwachung der Umgebung eines Kraftfahrzeugs beim autonomen oder teilautonomen Fahren des Kraftfahrzeugs Anwendung. Entsprechende Sensorvorrichtungen können beispielsweise als Kamerasysteme oder als LiDAR-Systeme ausgestaltet sein.

Für eine korrekte Funktion einer Sensorvorrichtung müssen Verunreinigungen, die sich auf der Sensorvorrichtung in Blickrichtung eines Sensors und/oder eines Senders befinden, entfernt werden. Entsprechende Verunreinigungen der Sensorvorrichtung treten im Straßenverkehr durchgehend beispielsweise durch Spritzwasser oder Staub auf.

Aus dem Stand der Technik (z.B. US2002/0139394 A1) bekannte Sensorvorrichtungen werden beispielsweise mittels eines Wischerblatts gereinigt, das über eine optische Oberfläche der Sensorvorrichtung wischt, um Verunreinigungen von der optischen Oberfläche zu entfernen. Eine entsprechend ausgebildete Sensorvorrichtung weist den Nachteil auf, dass die Sicht und somit die Funktionalität der Sensorvorrichtung während der Reinigung beeinträchtigt ist, da das Wischerblatt unweigerlich in das Sichtfeld eines Sensors und/oder eines Senders der Sensorvorrichtung eintritt. Ein weiterer Nachteil einer entsprechenden Reinigung ist, dass die optische Oberfläche der Sensorvorrichtung aufgrund der Wischbewegung des Wischerblatts über die optische Oberfläche verkratzen kann oder eine Oberflächenbeschichtung der Sensorvorrichtung abgenutzt wird. Ein nochmals weiter Nachteil einer entsprechenden Reinigung ist der Verschleiß des Wischerblatts.

Ferner sind aus dem Stand der Technik Sensorvorrichtungen bekannt, bei denen auf eine sich in Blickrichtung eines Sensors und/oder eines Senders befindliche optische Oberfläche der Sensorvorrichtung eine Reinigungsflüssigkeit mittels einer Fluiddüse aufgesprüht wird. Auch entsprechend ausgebildete Sensorvorrichtungen weisen den Nachteil auf, dass die Sicht und somit die Funktionalität der Sensorvorrichtung während der Reinigung beeinträchtigt ist, da die auf die optische Oberfläche aufgebrachte Reinigungsflüssigkeit unweigerlich die Sicht durch die optische Oberfläche der Sensorvorrichtung zumindest temporär verschlechtert.

Der vorliegenden Erfindung liegt die Aufgabe zugrunde, eine verbesserte Sensorvorrichtung bereitzustellen, die die oben beschriebenen Nachteile nicht aufweist.

Die der vorliegenden Erfindung zugrundeliegende Aufgabe wird durch eine Sensorvorrichtung mit den Merkmalen des Anspruchs 1 gelöst. Vorteilhafte Ausgestaltungen der Sensorvorrichtung sind in den von Anspruch 1 abhängigen Ansprüchen beschrieben.

Die erfindungsgemäße Sensorvorrichtung weist den Vorteil auf, dass zur Entfernung von nicht fest anhaftender flüssiger oder trockener Störstoffe auf der Schutzscheibe der Sensorvorrichtung Wasser bzw. eine Reinigungsflüssigkeit nicht unbedingt notwendig ist. Bei den Störstoffen kann es sich beispielsweise um Staub, Regen, Spritzwasser oder Betauung handeln.

Ferner weist die erfindungsgemäße Sensorvorrichtung den Vorteil auf, dass Störstoffansammlungen ohne Verwendung einer Reinigungsflüssigkeit präventiv vermieden bzw. verringert werden können.

Ein weiterer Vorteil der erfindungsgemäßen Sensorvorrichtung ist, dass aufgrund von nicht benötigten Wischerelementen und Dichtungen ein Verkratzen der Schutzscheibe und/oder einer optischen Außenfläche der Sensorvorrichtung und/oder einer Oberflächenbeschichtung der Sensorvorrichtung vermieden wird. Ferner wird ein Verschleiß eines Wischerblatts vermieden.

Ein nochmals weiterer Vorteil der erfindungsgemäßen Sensorvorrichtung ist, dass ein Sichtfeld des Sensors und/oder eines Senders (z.B. ein Laseremitter eines LiDAR-Systems) der Sensorvorrichtung während einer Reinigung der Schutzscheibe nicht beeinträchtigt wird.

Ferner weist die erfindungsgemäße Sensorvorrichtung den Vorteil auf, dass die Sensorvorrichtung sehr kompakte Abmessungen aufweist und insbesondere eine geringe Dickenerstreckung aufweist.

Der optische Sensor ist dazu ausgebildet, optische Signale zu erfassen. Der optische Sensor ist vorzugsweise als Kamera ausgestaltet. Die Kamera weist vorzugsweise eine Linse bzw. ein Linsensystem auf, mittels dem die optischen Signale bzw. Bilder beispielsweise auf einen CCD-Chip abgebildet werden. Folglich ist bei einer Ausgestaltung des Sensors als eine Kamera mit einer Linse oder mit einer Vielzahl von Linsen die Linse bzw. die Vielzahl der Linsen Teil des Sensors. Die Linsen sind daher nicht mit der Schutzscheibe der Sensorvorrichtung zu verwechseln.

Weiter vorzugsweise kann der optische Sensor Teil eines LiDAR-Systems sein. Dabei ist vorzugsweise eine Sendereinrichtung des LiDAR-System Teil des Sensors. Die Sendereinrichtung ist vorzugsweise als Laseremitter ausgebildet, der weiter vorzugsweise mittels eines Spiegelsystems in unterschiedliche Richtungen ablenkbar ist oder aus mikroelektromechanischen Strukturen (MEMS) besteht.

Der optische Sensor weist eine Blickrichtung auf. Im Sinne der Erfindung ist unter der Blickrichtung des Sensors die Verbindungsrichtung bzw. der Verbindungsvektor von dem Sensor hin zu einem Mittelpunkt des Sichtfeldes des Sensors zu verstehen.

Die Schutzscheibe ist für elektromagnetische Strahlung, für die der optische Sensor sensitiv ist und/oder in dem eine Sendeeinrichtung des Sensors emittiert, zumindest teilweise transparent.

Vorzugsweise ist die Schutzscheibe aus Glas, Plexiglas oder einem für optische Strahlung im Wesentlichen transparenten Kunststoff gebildet. Weiter vorzugsweise ist die Schutzscheibe hydrophob oder hydrophil beschichtet oder entsprechend behandelt, so dass die Oberfläche der Schutzscheibe hydrophob oder hydrophil ausgebildet ist.

Die Schutzscheibe ist vorzugsweise im Wesentlichen plan ausgebildet.

Die Schutzscheibe ist vorzugsweise im Wesentlichen kreisrund ausgebildet.

Das Merkmal, gemäß dem in Draufsicht auf die Schutzscheibe der Sensor versetzt zur Drehachse der Schutzscheibe positioniert ist, bedeutet, dass in Draufsicht auf die Schutzscheibe, also in einer Blickrichtung, die parallel zu einer Flächennormalen der Schutzscheibe verläuft und die auf die Schutzscheibe zu gerichtet ist, der Sensor zur Drehachse der Schutzscheibe einen Radialabstand aufweist.

Die Antriebseinrichtung ist vorzugsweise als Motor, insbesondere als Elektromotor ausgebildet. Ferner kann die Antriebseinrichtung auch als Antriebszahnrad ausgestaltet sein, das beispielsweise mittels eines Motors angetrieben werden kann. Die Antriebseinrichtung ist vorzugsweise ein Bestandteil der Sensorvorrichtung.

Vorzugsweise ist die Schutzscheibe austauschbar. Bei einer entsprechend ausgebildeten Sensorvorrichtung ist der Sensor leicht zugänglich, was beispielsweise bei einer Reparatur oder einer manuellen Reinigung vorteilhaft ist. Ferner ist bei einer Beschädigung oder einer Abnutzung der Schutzscheibe diese einfach austauschbar.

Unter einer Anordnung der Drehachse der Schutzscheibe parallel und versetzt zur Blickrichtung des Sensors ist eine Ausrichtung der Drehachse der Schutzscheibe parallel und versetzt zur Blickrichtung des Sensors zu verstehen.

Vorzugsweise weist die Sensorvorrichtung eine elektronische Steuereinheit auf, die mit dem Sensor und dem Motor signalgekoppelt ist.

Erfindungsgemäß ist die Sensorvorrichtung derart ausgebildet, dass die Sensorvorrichtung eine Fluidausgabeeinrichtung zum Aufbringen eines Fluids auf eine dem Sensor abgewandte Außenfläche der Schutzscheibe aufweist.

Eine entsprechend ausgebildete Sensorvorrichtung ermöglicht eine nochmals verbesserte Reinigung der Schutzscheibe.

Die Fluidausgabeeinrichtung weist vorzugsweise eine Fluiddüse oder eine Vielzahl von Fluiddüsen auf.

Die Fluidausgabeeinrichtung ist dazu ausgebildet, ein Fluid auf die Außenfläche der Schutzscheibe aufzubringen, beispielsweise durch Aufsprühen. Die Außenseite der Schutzscheibe ist dabei die dem Sensor abgewandte Oberfläche der Schutzseite.

Die Fluidausgabeeinrichtung ist dazu ausgebildet, Luft und/oder eine Reinigungsflüssigkeit, z.B. Wasser, auszugeben bzw. auszustoßen. Vorzugsweise ist die Fluidausgabeeinrichtung dazu ausgebildet, abwechselnd eine Reinigungsflüssigkeit und Luft auszustoßen.

Wenn beispielsweise eine Reinigungsflüssigkeit auf die Außenfläche der Schutzscheibe ausgegeben wird, wird die Reinigungsflüssigkeit durch Rotation der Schutzscheibe über die Oberfläche der Schutzscheibe in Richtung eines Randes der Schutzscheibe transportiert.

Die Schutzscheibe ist vorzugsweise zwischen der Fluidausgabeeinrichtung und dem Sensor angeordnet.

Weiter vorzugsweise ist die Sensorvorrichtung derart ausgebildet, dass in Draufsicht auf die Außenfläche der Schutzscheibe die Fluidausgabeeinrichtung zum Sensor in Drehrichtung der Schutzscheibe einen Winkelabstand von weniger als 180° aufweist.

Die entsprechend ausgebildete Sensorvorrichtung weist den Vorteil auf, dass insbesondere bei einem Aufbringen einer Reinigungsflüssigkeit auf die Außenfläche der Schutzscheibe die Reinigungsflüssigkeit aufgrund des Winkelabstandes von der Fluidausgabeeinrichtung hin zum Sensor und aufgrund der Drehung der Schutzscheibe zuverlässig von der Außenfläche der Schutzscheibe weggeschleudert wird, so dass bei einem nächsten Überstreichen des Bereichs der Schutzscheibe, auf dem die Reinigungsflüssigkeit aufgesprüht wurde, über den Sensor die Schutzscheibe von der Reinigungsflüssigkeit befreit ist, so dass die Sicht des Sensors auch während eines Reinigungsvorganges nicht beeinträchtigt ist.

Folglich ist die Fluidausgabeeinrichtung in Draufsicht auf die Außenfläche der Schutzscheibe bezüglich der Drehrichtung der Schutzscheibe dem Sensor nachgelagert angeordnet. Bei einem Winkelabstand von mehr als 180° in Drehrichtung der Schutzscheibe wäre die Fluidausgabeeinrichtung dem Sensor vorgelagert.

Folglich wird in Draufsicht auf die Außenfläche der Schutzscheibe und bei Drehung der Schutzscheibe in dessen Drehrichtung ein Radiusvektor der Schutzscheibe zuerst den Sensor überstreichen und nach einer Drehung von weniger als 180° die Fluidausgabeeinrichtung überstreichen. D.h., dass bei Drehung der Schutzscheibe in deren Drehrichtung die Schutzscheibe zuerst den Sensor überstreicht und in einem Winkelabstand von weniger als 180° die Fluidausgabeeinrichtung angeordnet ist.

In Draufsicht auf die Außenfläche der Schutzscheibe ist die Fluidausgabeeinrichtung nicht direkt über dem Sensor angeordnet so dass die Fluidausgabeeinrichtung nicht die Sicht des Sensors beeinträchtigt.

Vorzugsweise beträgt in Draufsicht auf die Außenfläche der Schutzscheibe der Winkelabstand zwischen der Fluidausgabeeinrichtung und dem Sensor weniger als 135°, weiter vorzugsweise weniger als 90°, und nochmals weiter vorzugsweise weniger als 45°.

Umso kleiner der Winkelabstand zwischen Sensor und Fluidausgabeeinrichtung ist, desto befreiter von Fluid bzw. Reinigungsfluid ist die Schutzscheibe bei einem nächsten Überstreichen des Sensors, da das Fluid bzw. das Reinigungsfluid vor einem nächsten Überstreichen über den Sensor aufgrund der Drehung der Schutzscheibe verbessert von der Außenfläche der Schutzscheibe entfernt wird.

Weiter vorzugsweise ist die Sensorvorrichtung derart ausgebildet, dass die Fluidausgabeeinrichtung eine Schiene aufweist, die eine Längserstreckung in Radialrichtung der Schutzscheibe aufweist, wobei die Schiene eine Vielzahl von Ausgabeöffnungen aufweist, über die das Fluid auf die Außenfläche der Schutzscheibe aufbringbar ist, und wobei die Ausgabeöffnungen entlang der Längserstreckung der Schiene zueinander beabstandet sind.

Bei der entsprechend ausgebildeten Sensorvorrichtung wird das Reinigungsfluid besonders gleichmäßig auf die Außenfläche der Schutzscheibe aufgetragen, so dass eine verbesserte Reinigung der Schutzscheibe erreicht wird.

Die Schiene weist folglich eine Längserstreckung auf, die in Draufsicht auf die Außenfläche der Schutzscheibe auf einer Verbindungslinie der Drehachse der Schutzscheibe, also dem Mittelpunkt der Schutzscheibe, zum Rand der Drehscheibe liegt.

Weiter ist die Sensorvorrichtung erfindungsgemäß derart ausgebildet, dass die Sensorvorrichtung eine Blasluftdüse zum Blasen von Druckluft auf die Außenfläche der Schutzscheibe aufweist.

Bei der entsprechend ausgebildeten Sensorvorrichtung kann eine auf die Außenfläche der Schutzscheibe aufgebrachte Flüssigkeit und insbesondere Reinigungsflüssigkeit nochmals verbessert entfernt werden.

Weiter ist die Sensorvorrichtung erfindungsgemäß derart ausgebildet, dass in Draufsicht auf die Außenfläche der Schutzscheibe die Blasluftdüse in Drehrichtung der Schutzscheibe der Fluidausgabeeinrichtung nachgelagert ist.

Folglich weist die Blasluftdüse zur Fluidausgabeeinrichtung einen Winkelabstand auf.

Vorzugsweise weist in Draufsicht auf die Schutzscheibe die Blasluftdüse zum Sensor einen Winkelabstand von mehr als 180° in Drehrichtung der Schutzscheibe, weiter vorzugsweise von mehr als 270° und nochmals weiter vorzugsweise von mehr als 300° auf.

Weiter vorzugsweise ist die Sensorvorrichtung derart ausgebildet, dass die Blasluftdüse dazu ausgebildet ist, Druckluft auf eine dem Sensor zugewandten Innenfläche der Schutzscheibe und/oder auf den Sensor zu blasen.

Somit lassen sich auch beispielsweise Staub- bzw. Schmutzanlagerungen an der Innenseite der Schutzscheibe und/oder auf dem Sensor effektiv entfernen.

Bei einer entsprechenden Ausbildung der Sensorvorrichtung wird eine dauerhafte Reinhaltung auch der Innenfläche der Schutzscheibe ermöglicht, sodass die entsprechend ausgebildete Sensorvorrichtung eine erhöhte Zuverlässigkeit aufweist.

Weiter vorzugsweise ist die Sensorvorrichtung derart ausgebildet, dass die Blasluftdüse eine Schiene aufweist, die eine Längserstreckung in Radialrichtung der Schutzscheibe aufweist, wobei die Schiene eine Vielzahl von Ausgabeöffnungen aufweist, über die Druckluft auf die Außenfläche der Schutzscheibe aufbringbar ist, und wobei die Ausgabeöffnungen entlang der Längserstreckung der Schiene zueinander beabstandet sind.

Bei der entsprechend ausgebildeten Sensorvorrichtung wird eine verbesserte Reinigung der Schutzscheibe erzielt, da sowohl feste als auf flüssige Anhaftungen an der Außenseite der Schutzscheibe mittels der Blasluftdüse verbessert entfernt werden können.

Die Schiene weist eine Längserstreckung auf, die in Draufsicht auf die Außenfläche der Schutzscheibe auf einer Verbindungslinie der Drehachse der Schutzscheibe, also dem Mittelpunkt der Schutzscheibe, zum Rand der Schutzscheibe liegt.

Weiter vorzugsweise ist die Sensorvorrichtung derart ausgebildet, dass die Schutzscheibe auf einer dem Sensor zugewandten Innenfläche zumindest eine Erhebung aufweist.

Bei der entsprechend ausgebildeten Sensorvorrichtung wird durch Drehung der Schutzscheibe ein Luftstrom zwischen der Innenfläche der Schutzscheibe und dem Sensor erzeugt, so dass Staub- bzw. Schmutzanhaftungen auf dem Sensor entfernt werden. Vorzugsweise weist die Erhebung eine Längserstreckung in Radialrichtung der Schutzscheibe auf.

Die Erhebung ist vorzugsweise einstückig mit der Schutzscheibe ausgebildet. Weiter vorzugsweise ist auch die Erhebung aus dem Material gebildet, aus dem die Schutzscheibe besteht, so dass auch die Erhebung für elektromagnetische Strahlung, für die der optische Sensor sensitiv ist, zumindest teilweise transparent ist.

Weiter vorzugsweise ist die Sensorvorrichtung derart ausgebildet, dass die Sensorvorrichtung einen Schutzschirm aufweist, der wiederum ein Sichtfenster aufweist, wobei die Schutzscheibe zwischen dem Sensor und dem Schutzschirm angeordnet ist, und wobei das Sichtfenster so positioniert ist, dass ein Sensorsichtfeld des Sensors nicht beeinträchtigt ist.

Durch den Schutzschirm wird sichergestellt, dass nach einer Reinigung der Schutzscheibe diese nicht oder lediglich vermindert verschmutzt wird, bis aufgrund der Drehung der Schutzscheibe ein gereinigter Bereich der Schutzscheibe wieder in das Sichtfeld des Sensors gedreht wird.

Das Merkmal, gemäß dem die Schutzscheibe zwischen dem Sensor und dem Schutzschirm angeordnet ist, ist so zu verstehen, dass in Seitenansicht auf die Sensorvorrichtung, also in einer Blickrichtung senkrecht zur Blickrichtung des Sensors, die Schutzscheibe zwischen dem Sensor und dem Schutzschirm angeordnet ist.

Das Sichtfenster ist vorzugsweise als Materialausnehmung bzw. Durchgangsöffnung in dem Schutzschild ausgebildet.

Das Merkmal, gemäß dem das Sichtfeld so positioniert ist, dass ein Sensorsichtfeld des Sensors nicht beeinträchtigt ist, kann auch so ausgedrückt werden, dass in Seitenansicht auf die Sensorvorrichtung, also in einer Blickrichtung senkrecht zur Blickrichtung des Sensors, das Sichtfenster oberhalb des Sensors angeordnet ist. Folglich befindet sich das Sichtfenster in Blickrichtung des Sensors.

Weiter vorzugsweise ist die Sensorvorrichtung derart ausgebildet, dass die Sensorvorrichtung eine Flüssigkeitsaufnahmeeinrichtung zur Aufnahme und/oder zur Ableitung von auf die Außenfläche der Schutzscheibe aufgebrachter Flüssigkeit aufweist.

Die entsprechend ausgebildete Sensorvorrichtung weist diverse Vorteile auf. Zum einen wird eine Verunreinigung einer Umgebung der Sensorvorrichtung vermieden, da durch die Flüssigkeitsaufnahmeeinrichtung aufgenommene Flüssigkeit nicht zur Verunreinigung von der Umgebung der Sensorvorrichtung beiträgt. Ein weiterer Vorteil der entsprechend ausgebildeten Sensorvorrichtung ist, dass diese einen potenziell verminderten Flüssigkeitsbedarf aufweist, da eine Reinigungsflüssigkeit wiederverwendet werden kann. Folglich sind mit der Sensorvorrichtung fluidverbundenen Flüssigkeitsvorratsbehälter potenziell kleiner ausgebildet.

Die Flüssigkeitsaufnahmeeinrichtung ist vorzugsweise zumindest mittelbar mit der Fluidausgabeeinrichtung fluidverbunden. Vorzugsweise ist die Flüssigkeitsaufnahmeeinrichtung über einen Flüssigkeitstank mit der Fluidausgabeeinrichtung fluidverbunden.

Weiter vorzugsweise ist die Sensorvorrichtung derart ausgebildet, dass die Flüssigkeitsaufnahmeeinrichtung im radialen Abstand von der Schutzscheibe angeordnet ist.

Durch die radiale Beabstandung der Flüssigkeitsaufnahmeeinrichtung von der Schutzscheibe wird die auf die Außenfläche der Schutzscheibe aufgebrachte Flüssigkeit aufgrund der Drehbewegung der Schutzscheibe verbessert aufgenommen bzw. wiedergewonnen.

Weiter vorzugsweise ist die Sensorvorrichtung derart ausgebildet, dass die Sensorvorrichtung einen Verschmutzungssensor zur Bestimmung eines Verschmutzungsgrads der Schutzscheibe aufweist. Eine entsprechend ausgebildete Sensorvorrichtung weist den Vorteil auf, dass eine Initiierung eines Reinigungsprozesses beispielsweise durch eine Drehung der Schutzscheibe und/oder durch Aufbringen eines Reinigungsfluids auf einer Außenfläche der Schutzscheibe und/oder ein Abblasen eines Flüssigkeitsfilmes von der Außenseite der Schutzscheibe verbessert gesteuert werden können.

Die der vorliegenden Erfindung zugrundeliegende Aufgabe wird ferner gemäß Anspruch 11
durch ein Verfahren zur Säuberung einer Schutzscheibe einer Sensorvorrichtung mit den oben beschriebenen Merkmalen gelöst, wobei das Verfahren folgende Verfahrensschritte aufweist:
- Überprüfen einer optischen Durchlässigkeit der Schutzscheibe;
- Ausgeben eines Startsignals an die Antriebseinrichtung, so dass die Schutzscheibe in Drehung versetzt wird, wenn die optische Durchlässigkeit der Schutzscheibe niedriger als eine vorbestimmte optische Mindestdurchlässigkeit ist;
- Überprüfen der optischen Durchlässigkeit der Schutzscheibe;
- Ausgeben eines ersten Reinigungssignals, so dass Druckluft auf eine Außenfläche der Schutzscheibe geblasen wird, wenn die optische Durchlässigkeit der Schutzscheibe niedriger als die vorbestimmte optische Mindestdurchlässigkeit ist;
- Überprüfen der optischen Durchlässigkeit der Schutzscheibe;
- Ausgeben eines zweiten Reinigungssignals, so dass Reinigungsflüssigkeit auf eine Außenfläche der Schutzscheibe aufgebracht wird, wenn die optische Durchlässigkeit der Schutzscheibe niedriger als die vorbestimmte optische Mindestdurchlässigkeit ist, bis die optische Durchlässigkeit größer oder gleich der optischen Mindestdurchlässigkeit ist, und anschließendes Blasen von Druckluft auf die Außenfläche der Schutzscheibe; und
- Ausgeben eines Stoppsignals an die Antriebseinrichtung, so dass die Drehung der Schutzscheibe beendet wird.

Der Verfahrensschritt der Überprüfung der optischen Durchlässigkeit der Schutzscheibe erfolgt vorzugsweise unter Berücksichtigung der Bilddaten des Sensors. Beispielsweise kann in den Bilddaten nach Bildinformationen gefiltert werden, die mit einer Wiederholfrequenz auftreten, die der inversen Winkelgeschwindigkeit der Drehung der Schutzscheibe entspricht. Denn auf der Schutzscheibe befindliche Verschmutzungen werden bei Drehung der Schutzscheibe mit einer Wiederholfrequenz in das Sichtfeld des Sensors gelangen, die der inversen Winkelgeschwindigkeit der Drehung der Schutzscheibe entspricht.

Weiter vorzugsweise erfolgt der Verfahrensschritt der Überprüfung der optischen Durchlässigkeit der Schutzscheibe unter Berücksichtigung von Daten eines separaten Verschmutzungssensors. Weitere Vorteile, Einzelheiten und Merkmale der Erfindung ergeben sich nachfolgend aus den erläuterten Ausführungsbeispielen. Dabei zeigen im Einzelnen:
- Figur 1:: eine Draufsicht auf eine schematische Darstellung einer nicht-beanspruchten Sensorvorrichtung;
- Figur 2:: eine Seitenansicht auf die schematisch dargestellte Sensorvorrichtung aus Figur 1;
- Figur 3:: eine Draufsicht auf eine schematische Darstellung einer Sensorvorrichtung gemäß einer erfindungsgemäßen Ausführungsform;
- Figur 4:: eine Seitenansicht auf die schematisch dargestellte Sensorvorrichtung aus Figur 3;
- Figur 5:: eine schematische Darstellung einer Schutzscheibe mit einer an deren Innenfläche ausgebildeten Erhebung; und
- Figur 6:: ein Flussablaufdiagramm eines Verfahrens zur Säuberung einer Schutzscheibe einer Sensorvorrichtung.

In der nun folgenden Beschreibung bezeichnen gleiche Bezugszeichen gleiche Bauteile bzw. gleiche Merkmale, so dass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

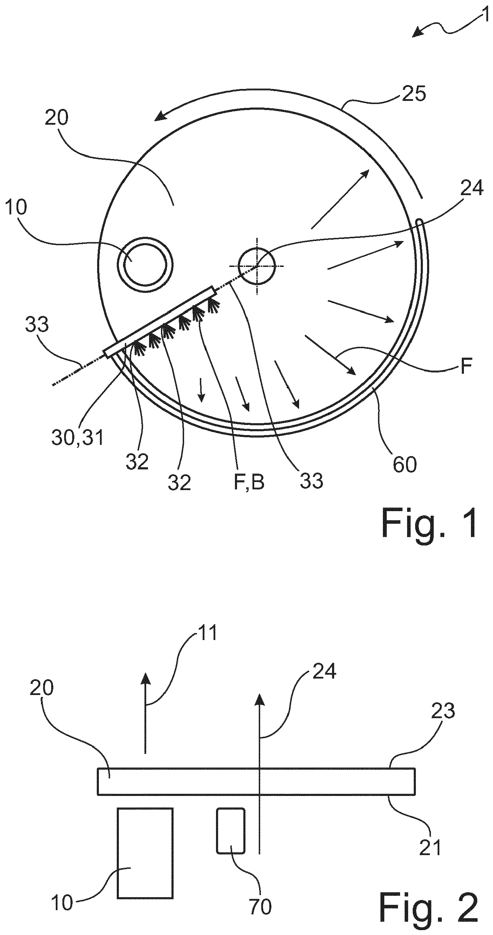

Figur 1 zeigt eine Draufsicht auf eine schematisch dargestellte, aber nicht-beanspruchte, Sensorvorrichtung 1. Die Sensorvorrichtung 1 weist einen optischen Sensor 10 auf, der dazu ausgebildet, optische Signale zu erfassen. Der optische Sensor 10 ist vorzugsweise als Kamera 10 ausgestaltet. Die Kamera 10 weist vorzugsweise eine Linse bzw. ein Linsensystem auf, mittels dem die optischen Signale bzw. Bilder beispielsweise auf einen CCD-Chip abgebildet werden. Folglich ist bei einer Ausgestaltung des Sensors 10 als eine Kamera 10 mit einer Linse oder mit einer Vielzahl von Linsen die Linse bzw. die Vielzahl der Linsen Teil des Sensors 10.

Weiter vorzugsweise kann der optische Sensor 10 Teil eines LiDAR-Systems 10 sein. Dabei ist vorzugsweise eine Sendereinrichtung des LiDAR-System Teil des Sensors 10. Die Sendereinrichtung ist vorzugsweise als Laseremitter ausgebildet, der weiter vorzugsweise mittels eines Spiegelsystems in unterschiedliche Richtungen ablenkbar ist oder aus mikroelektromechanischen Strukturen (MEMS) besteht.

Der optische Sensor weist eine Blickrichtung 11 auf. Im Sinne der Erfindung ist unter der Blickrichtung des Sensors 10 die Verbindungsrichtung bzw. der Verbindungsvektor von dem Sensor 10 hin zu einem Mittelpunkt des Sichtfeldes des Sensors 10 zu verstehen.

Die Sensorvorrichtung 1 weist ferner eine Schutzscheibe 20 auf, die in Blickrichtung 11 des Sensors 10 dem Sensor 10 vorgelagert ist. Wie aus Figur 2 ersichtlich ist, müssen die von dem optischen Sensor 10 empfangenen bzw. ausgestrahlten optischen Signale folglich durch die Schutzscheibe 20 hindurch strahlen.

Die Schutzscheibe 20 ist um eine Drehachse 24 drehbar gelagert und mittels einer in den Figuren nicht dargestellten Antriebseinrichtung in Drehung versetzbar. Bei dem in Figur 1 dargestellten nicht-beanspruchten Beispiel wird die Schutzscheibe 20 in eine mit dem Pfeil 25 dargestellte Drehrichtung 25 angetrieben. Die Antriebseinrichtung ist vorzugsweise als Motor, insbesondere als Elektromotor ausgebildet. Ferner kann die Antriebseinrichtung auch als Antriebszahnrad ausgestaltet sein, das beispielsweise mittels eines Motors angetrieben werden kann. Die Antriebseinrichtung ist vorzugsweise ein Bestandteil der Sensorvorrichtung 1.

Die Drehachse 24 der Schutzscheibe 20 verläuft dabei parallel zur Blickrichtung 11 des Sensors, wobei in Draufsicht auf die Schutzscheibe 20 der Sensor 10 versetzt zur Drehachse 24 der Schutzscheibe 20 positioniert ist. Das Merkmal, gemäß dem in Draufsicht auf die Schutzscheibe 20 der Sensor 10 versetzt zur Drehachse 24 der Schutzscheibe 20 positioniert ist, bedeutet, dass in Draufsicht auf die Schutzscheibe 10, also in einer Blickrichtung, die parallel zu einer Flächennormalen der Schutzscheibe 20 verläuft und die auf die Schutzscheibe 20 zu gerichtet ist, der Sensor 10 zur Drehachse 24 der Schutzscheibe 20 einen Radialabstand aufweist.

Wie aus den Figuren 1 und 2 ersichtlich ist, weist die Sensorvorrichtung 1 eine Fluidausgabeeinrichtung 30 zum Aufbringen eines Fluids F, B auf eine dem Sensor 10 abgewandten Außenfläche 23 der Schutzscheibe 20 auf. Dabei weist die Fluidausgabeeinrichtung 30 eine Schiene 31 auf, die eine Längserstreckung 33 in Radialrichtung der Schutzscheibe 20 aufweist. Die Schiene 31 weist eine Vielzahl von Ausgabeöffnungen 32 auf, über die das Fluid F, B auf die Außenfläche 23 der Schutzscheibe 20 aufbringbar ist. Dabei sind die Ausgabeöffnungen 32 entlang der Längserstreckung 33 der Schiene 31 zueinander beabstandet.

Das von der Fluidausgabeeinrichtung 30 ausgestoßene Fluid kann eine Reinigungsflüssigkeit F sein. Ferner kann das von Fluidausgabeeinrichtung 30 ausgestoßene Fluid Blasluft B sein. Die Fluidausgabeeinrichtung 30 kann auch dazu ausgebildet sein, sowohl eine Reinigungsflüssigkeit F als ein Blasluft B auszustoßen. Beispielsweise kann eine Reinigungsflüssigkeit F und Blasluft B abwechselnd ausgegeben werden.

Aus Figur 1 ist ersichtlich, dass in Draufsicht auf die Außenfläche 23 der Schutzscheibe 20 die Fluidausgabeeinrichtung 30 zum Sensor 10 in Drehrichtung 25 der Schutzscheibe 20 einen Winkelabstand von etwa 15° aufweist. Die vorliegende Erfindung ist jedoch nicht auf einen entsprechenden Winkelabstand beschränkt. Der Winkelabstand beträgt dabei vorzugsweise weniger als 180°.

Die Sensorvorrichtung 1 weist ferner eine Flüssigkeitsaufnahmeeinrichtung 60 zur Aufnahme von auf die Außenfläche 23 der Schutzscheibe 20 aufgebrachter Flüssigkeit F auf. Insbesondere aus Figur 1 ist ersichtlich, dass die Flüssigkeitsaufnahmeeinrichtung 60 im radialen Abstand von der Schutzscheibe 60 angeordnet ist.

Die Flüssigkeitsaufnahmeeinrichtung 60 ist in dem dargestellten Beispiel als in Draufsicht teilkreisförmige Vertiefung ausgebildet, die ein Aufnahmevolumen bildet, das über beispielsweise einen Unterdruck die Flüssigkeit F, die von der Schutzscheibe 20 aufgrund der Drehbewegung der Schutzscheibe 20 von dieser weggeschleudert wird, aufsaugen kann.

Die Sensorvorrichtung 1 weist ferner einen Verschmutzungssensor 70 zur Bestimmung eines Verschmutzungsgrads der Schutzscheibe 20 auf. In dem dargestellten Beispiel ist der Verschmutzungssensor 70 als separates Bauteil ausgebildet. Jedoch ist es auch möglich, dass der Verschmutzungssensor 70 integral mit dem Sensor 10 ausgebildet ist.

Vorzugsweise ist der Sensor 10 selber derart ausgebildet, dass der Verschmutzungsgrad der Schutzscheibe 20 mittels des Sensors 10 bestimmbar ist.

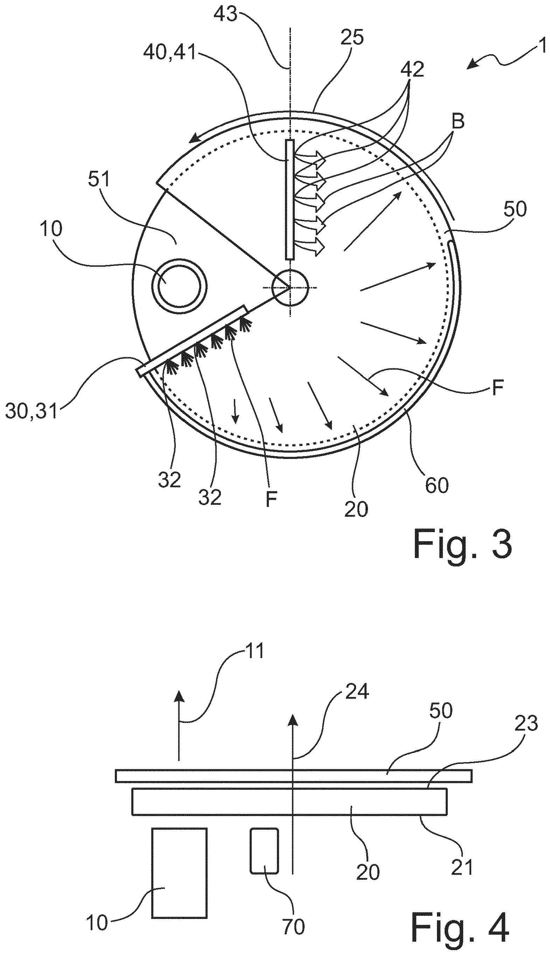

In den Figuren 3 und 4 ist eine Sensorvorrichtung 1 gemäß einer Ausführungsform der vorliegenden Erfindung dargestellt, wobei in Figur 3 die Sensorvorrichtung 1 in einer Draufsicht dargestellt ist, und wobei in Figur 4 die in Figur 3 dargestellte Sensorvorrichtung in einer Seitenansicht dargestellt ist. Der Aufbau der in den Figuren 3 und 4 dargestellten Sensorvorrichtung 1 entspricht dabei dem Aufbau der in den Figuren 1 und 2 dargestellten Sensorvorrichtung 1, sodass auf die obige Beschreibung verwiesen wird, wobei die Unterschiede der Sensorvorrichtung 1 gemäß der erfindungsgemäßen Ausführungsform im Folgenden beschrieben werden.

Die in den Figuren 3 und 4 dargestellte Sensorvorrichtung 1 weist eine Blasluftdüse 40 zum Blasen von Druckluft B auf die Außenfläche 23 das Schutzscheibe 20 auf. Insbesondere aus Figur 3 ist ersichtlich, dass in Draufsicht auf die Außenfläche 23 der Schutzscheibe 20 die Blasluftdüse 40 in Drehrichtung 25 der Schutzscheibe 20 der Fluidausgabeeinrichtung 30 nachgelagert ist. Die Blasluftdüse weist eine Schiene 41 auf, die eine Längserstreckung 43 in Radialrichtung der Schutzscheibe 20 aufweist. Ferner weist die Schiene 41 eine Vielzahl von Ausgabeöffnungen 42 auf, über die Druckluft B auf die Außenfläche 23 der Schutzscheibe 20 aufbringbar ist. Die Ausgabeöffnungen 42 sind dabei entlang der Längserstreckung 43 der Schiene 41 zueinander beabstandet.

Die Sensorvorrichtung 1 weist ferner einen Schutzschirm 50 auf, der wiederum ein Sichtfenster 51 aufweist. Wie aus Figur 3 ersichtlich ist, ist bei der in Figur 3 dargestellten Ausführungsform das Sichtfenster 51 als Ausnehmung 51 in dem Schutzschirm 50 ausgebildet.

Wie aus Figur 4 ersichtlich ist, ist die Schutzscheibe 20 zwischen dem Sensor 10 und dem Schutzschirm 50 angeordnet. Aus Figur 3 ist ersichtlich, dass das Sichtfenster 51 so positioniert ist, dass ein Sensorsichtfeld des Sensors 10 nicht beeinträchtigt ist.

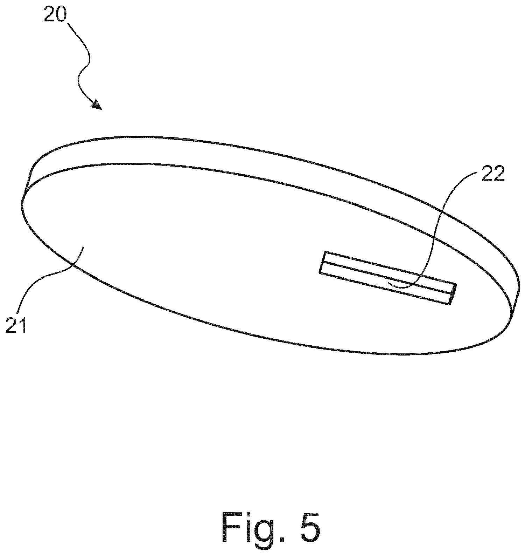

Figur 5 zeigt eine alternative Ausführung der Schutzscheibe 20 einer Sensorvorrichtung 1 in Alleinstellung. Die in Figur 5 dargestellte Schutzscheibe 20 kann anstelle der in den Figuren 1 bis 4 dargestellten Schutzscheibe 20 verwendet werden. Bei der in Figur 5 dargestellten Schutzscheibe 20 der Sensorvorrichtung 1 weist die Schutzscheibe 20 auf einer dem Sensor 10 zugewandten Innenfläche 21 zumindest eine Erhebung 22 auf. Bei der entsprechend ausgebildeten Sensorvorrichtung 1 wird durch Drehung der Schutzscheibe 20 ein Luftstrom zwischen der Innenfläche 21 der Schutzscheibe 20 und dem Sensor 10 erzeugt, so dass Staub- bzw. Schmutzanhaftungen auf dem Sensor 10 entfernt werden.

Es ist ersichtlich, dass bei der dargestellten Ausführungsform die Erhebung 22 eine Längserstreckung in Radialrichtung der Schutzscheibe 20 aufweist.

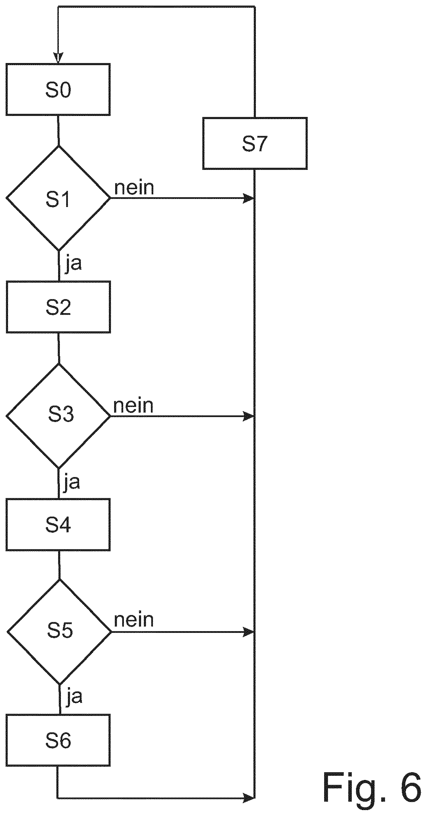

Figur 6 zeigt ein Flussablaufdiagramm eines Verfahrens zur Säuberung einer Schutzscheibe einer Sensorvorrichtung. In einem Verfahrensschritt S0 wird die Sensorvorrichtung 1 aktiviert. Anschließend wird in einem Verfahrensschritt S1 eine optische Durchlässigkeit der Schutzscheibe 20 überprüft. Wenn die optische Durchlässigkeit der Schutzscheibe 20 niedriger als eine vorbestimmte optische Mindestdurchlässigkeit ist, wird in einem Verfahrensschritt S2 ein Startsignal an die Antriebseinrichtung ausgegeben, so dass die Schutzscheibe 20 in Drehung versetzt wird. Wenn die optische Durchlässigkeit der Schutzscheibe 20 größer oder gleich der vorbestimmten optischen Mindestdurchlässigkeit ist, wird in einem Verfahrensschritt S7 ein Stoppsignal an die Antriebseinrichtung ausgegeben, so dass die Drehung der Schutzscheibe 20 beendet wird. In einem Verfahrensschritt S3 wird die optische Durchlässigkeit der Schutzscheibe 20 überprüft. Wenn die optische Durchlässigkeit der Schutzscheibe 20 niedriger als eine vorbestimmte optische Mindestdurchlässigkeit ist, wird in einem Verfahrensschritt S4 ein erstes Reinigungssignal ausgegeben, so dass Druckluft auf eine Außenfläche 23 der Schutzscheibe 20 geblasen wird. Wenn die optische Durchlässigkeit der Schutzscheibe 20 größer oder gleich der vorbestimmten optischen Mindestdurchlässigkeit ist, wird in der Verfahrensschritt S7 ausgeführt, so dass ein Stoppsignal an die Antriebseinrichtung ausgegeben, wodurch die Drehung der Schutzscheibe 20 beendet wird. In einem Verfahrensschritt S5 wird die optische

Durchlässigkeit der Schutzscheibe 20 überprüft. Wenn die optische Durchlässigkeit der Schutzscheibe 20 niedriger als eine vorbestimmte optische Mindestdurchlässigkeit ist, wird in einem Verfahrensschritt S6 ein zweites Reinigungssignal ausgegeben, so dass Reinigungsflüssigkeit auf eine Außenfläche 23 der Schutzscheibe 20 aufgebracht wird, bis die optische Durchlässigkeit größer oder gleich der optischen Mindestdurchlässigkeit ist. Anschließend wird Druckluft auf die Außenfläche (23) der Schutzscheibe 20 geblasen. Dem nachfolgend wird im Verfahrensschritt S7 ein Stoppsignal an die Antriebseinrichtung ausgegeben, so dass die Drehung der Schutzscheibe 20 beendet wird.

Bei einem alternativen Verfahren ist es möglich, dass die Schutzscheibe 20 permanent in einer ersten Drehgeschwindigkeit gedreht wird, und bei Detektion einer optischen Durchlässigkeit, die niedriger als die optische Mindestdurchlässigkeit ist, die Rotationsgeschwindigkeit der Drehscheibe 20 erhöht wird. Anschließend werden die oben beschriebenen Verfahrensschritte durchgeführt.

### Bezugszeichenliste

- 1: Sensorvorrichtung
- 10: Sensor
- 11: Blickrichtung (des Sensors)
- 20: Schutzscheibe
- 21: Innenfläche / Innenseite (der Schutzscheibe)
- 22: Erhebung (auf der Innenseite der Schutzscheibe)
- 23: Außenfläche / Außenseite (der Schutzscheibe)
- 24: Drehachse (der Schutzscheibe)
- 25: Drehrichtung (der Schutzscheibe)
- 30: Fluidausgabeeinrichtung / Fluiddüse
- 31: Schiene (der Fluidausgabeeinrichtung)
- 32: Ausgabeöffnung (der Schiene / Fluidausgabeeinrichtung)
- 33: Längserstreckung (der Schiene)
- 40: Blasluftdüse
- 41: Schiene (der Blasluftdüse)
- 42: Ausgabeöffnung (der Schiene der Blasluftdüse)
- 43: Längserstreckung (der Schiene der Blasluftdüse)
- 50: Schutzschirm
- 51: Sichtfenster / Ausnehmung (des Schutzschirms)
- 60: Flüssigkeitsaufnahmeeinrichtung
- 70: Verschmutzungssensor
- B: Blasluft
- F: Fluid / Reinigungsfluid

## Patentansprüche

1. Sensorvorrichtung (1) für ein Kraftfahrzeug mit
- zumindest einem optischen Sensor (10) und mit
- einer Schutzscheibe (20), die in einer Blickrichtung (11) des Sensors (11) dem Sensor (10) vorgelagert ist;
- einer Fluidausgabeeinrichtung (30) zum Aufbringen eines Fluids (F) auf eine dem Sensor (10) abgewandte Außenfläche (23) der Schutzscheibe (20);
- wobei die Schutzscheibe (20) um eine Drehachse (24) drehbar gelagert und mittels einer Antriebseinrichtung in Drehung versetzbar ist;
- die Drehachse (24) der Schutzscheibe (20) parallel zur Blickrichtung (11) des Sensors (11) verläuft; und
- in Draufsicht auf die Schutzscheibe (20) der Sensor (10) versetzt zur Drehachse (24) der Schutzscheibe (20) positioniert ist,
wobei die Sensorvorrichtung (1) durch folgende Merkmale **gekennzeichnet** ist:
- die Sensorvorrichtung (1) weist eine Blasluftdüse (40) zum Blasen von Druckluft auf die Außenfläche (23) der Schutzscheibe (20) auf; und
- in Draufsicht auf die Außenfläche (23) der Schutzscheibe (20) ist die Blasluftdüse (40) in Drehrichtung (25) der Schutzscheibe (20) der Fluidausgabeeinrichtung (30) nachgelagert.

2. Sensorvorrichtung (1) nach Anspruch 1, **dadurch gekennzeichnet, dass** in Draufsicht auf die Außenfläche (23) der Schutzscheibe (20) die Fluidausgabeeinrichtung (30) zum Sensor (10) in Drehrichtung (25) der Schutzscheibe (20) einen Winkelabstand von weniger als 180° aufweist.

3. Sensorvorrichtung (1) nach Anspruch 1 oder Anspruch 2, **gekennzeichnet durch** die folgenden Merkmale:
- die Fluidausgabeeinrichtung (30) weist eine Schiene (31) auf, die eine Längserstreckung (33) in Radialrichtung der Schutzscheibe (20) aufweist;
- die Schiene (31) weist eine Vielzahl von Ausgabeöffnungen (32) auf, über die das Fluid (F) auf die Außenfläche (23) der Schutzscheibe aufbringbar ist; und
- die Ausgabeöffnungen (32) sind entlang der Längserstreckung (33) der Schiene (31) zueinander beabstandet.

4. Sensorvorrichtung (1) nach einem der vorhergehenden Ansprüche, **dadurch gekennzeichnet, dass** die Blasluftdüse (40) dazu ausgebildet ist, Druckluft auf eine dem Sensor (10) zugewandten Innenfläche (21) der Schutzscheibe (20) und/oder auf den Sensor (10) zu blasen.

5. Sensorvorrichtung (1) nach einem der vorhergehenden Ansprüche, **gekennzeichnet durch** die folgenden Merkmale:
- die Blasluftdüse (40) weist eine Schiene (41) auf, die eine Längserstreckung (43) in Radialrichtung der Schutzscheibe (20) aufweist;
- die Schiene (41) weist eine Vielzahl von Ausgabeöffnungen (42) auf, über die Druckluft auf die Außenfläche (23) der Schutzscheibe (20) aufbringbar ist; und
- die Ausgabeöffnungen (42) sind entlang der Längserstreckung (43) der Schiene (41) zueinander beabstandet.

6. Sensorvorrichtung (1) nach einem der vorhergehenden Ansprüche, **dadurch gekennzeichnet, dass** die Schutzscheibe (20) auf einer dem Sensor (10) zugewandten Innenfläche (21) zumindest eine Erhebung (22) aufweist.

7. Sensorvorrichtung (1) nach einem der vorhergehenden Ansprüche, **gekennzeichnet durch** folgende Merkmale:
- die Sensorvorrichtung (1) weist einen Schutzschirm (50) auf, der ein Sichtfenster (51) aufweist;
- die Schutzscheibe (20) ist zwischen dem Sensor (10) und dem Schutzschirm (50) angeordnet; und
- das Sichtfenster (51) ist so positioniert, dass ein Sensorsichtfeld des Sensors (10) nicht beeinträchtigt ist.

8. Sensorvorrichtung (1) nach einem der vorhergehenden Ansprüche, **dadurch gekennzeichnet, dass** die Sensorvorrichtung (1) eine Flüssigkeitsaufnahmeeinrichtung (60) zur Aufnahme und/oder zur Ableitung von auf die Außenfläche (23) der Schutzscheibe (20) aufgebrachter Flüssigkeit aufweist.

9. Sensorvorrichtung (1) nach Anspruch 8, **dadurch gekennzeichnet, dass** die Flüssigkeitsaufnahmeeinrichtung (60) im radialen Abstand von der Schutzscheibe (20) angeordnet ist.

10. Sensorvorrichtung (1) nach einem der vorhergehenden Ansprüche, **dadurch gekennzeichnet, dass** die Sensorvorrichtung (1) einen Verschmutzungssensor (70) zur Bestimmung eines Verschmutzungsgrads der Schutzscheibe (20) aufweist.

11. Verfahren zur Säuberung einer Schutzscheibe (20) einer Sensorvorrichtung (1) mit den Merkmalen eines der vorhergehenden Ansprüche, wobei das Verfahren folgende Verfahrensschritte aufweist:
- Überprüfen (S1) einer optischen Durchlässigkeit der Schutzscheibe (20);
- Ausgeben (S2) eines Startsignals an die Antriebseinrichtung, so dass die Schutzscheibe (20) in Drehung versetzt wird, wenn die optische Durchlässigkeit der Schutzscheibe (20) niedriger als eine vorbestimmte optische Mindestdurchlässigkeit ist;
- Überprüfen (S3) der optischen Durchlässigkeit der Schutzscheibe (20);
- Ausgeben (S4) eines ersten Reinigungssignals, so dass Druckluft auf eine Außenfläche (23) der Schutzscheibe (20) geblasen wird, wenn die optische Durchlässigkeit der Schutzscheibe (20) niedriger als die vorbestimmte optische Mindestdurchlässigkeit ist;
- Überprüfen (S5) der optischen Durchlässigkeit der Schutzscheibe (20);
- Ausgeben (S6) eines zweiten Reinigungssignals, so dass Reinigungsflüssigkeit auf eine Außenfläche (23) der Schutzscheibe (20) aufgebracht wird, wenn die optische Durchlässigkeit der Schutzscheibe (20) niedriger als die vorbestimmte optische Mindestdurchlässigkeit ist, bis die optische Durchlässigkeit größer oder gleich der optischen Mindestdurchlässigkeit ist, und anschließendes Blasen von Druckluft auf die Außenfläche (23) der Schutzscheibe (20); und
- Ausgeben (S7) eines Stoppsignals an die Antriebseinrichtung, so dass die Drehung der Schutzscheibe (20) beendet wird.

## Claims

1. Sensor device (1) for a motor vehicle having
- at least one optical sensor (10) and having
- a protective screen (20) mounted upstream of the sensor (10) in a viewing direction (11) of the sensor (11);
- a fluid dispenser (30) for applying a fluid (F) to an outer surface (23) of the protective screen (20) facing away from the sensor (10);
- wherein the protective screen (20) is rotatably mounted about an axis of rotation (24) and can be set in rotation by means of a drive device;
- the axis of rotation (24) of the protective screen (20) is parallel to the viewing direction (11) of the sensor (11); and
- in a plan view of the protective screen (20), the sensor (10) is positioned offset to the axis of rotation (24) of the protective screen (20).
wherein the sensor device (1) is **characterized by** the following features:
- the sensor device (1) comprises an air blower nozzle (40) for blowing compressed air onto the outer surface (23) of the protective screen (20); and
- in a plan view of the outer surface (23) of the protective screen (20), the air blower nozzle (40) is arranged downstream of the fluid dispenser (30) in the direction of rotation (25) of the protective screen (20).

2. Sensor device (1) according to Claim 1, **characterized in that**, in plan view of the outer surface (23) of the protective screen (20), the fluid dispenser (30) has an angular distance of less than 180° from the sensor (10) in the direction of rotation (25) of the protective screen (20).

3. Sensor device (1) according to Claim 1 or 2, **characterized by** the following features:
- the fluid dispenser (30) comprises a rail (31) having a longitudinal extension (33) in the radial direction of the protective screen (20);
- the rail (31) has a plurality of dispensing openings (32) through which the fluid (F) can be applied to the outer surface (23) of the protective screen; and
- the dispensing openings (32) are spaced apart from one another along the longitudinal extension (33) of the rail (31) .

4. Sensor device (1) according to one of the preceding claims, **characterized in that** the air blower nozzle (40) is designed to blow compressed air onto an inner surface (21) of the protective screen (20) facing the sensor (10) and/or onto the sensor (10).

5. Sensor device (1) according to any one of the preceding claims, **characterized by** the following features:
- the air blower nozzle (40) comprises a rail (41) having a longitudinal extension (43) in the radial direction of the protective screen (20);
- the rail (41) has a plurality of dispensing openings (42) through which compressed air can be applied to the outer surface (23) of the protective screen (20); and
- the dispensing openings (42) are spaced apart from one another along the longitudinal extension (43) of the rail (41) .

6. Sensor device (1) according to one of the preceding claims, **characterized in that** the protective screen (20) has at least one elevation (22) on an inner surface (21) facing the sensor (10) .

7. Sensor device (1) according to any one of the preceding claims, **characterized by** the following features:
- the sensor device (1) has a protective shield (50) which has a viewing window (51);
- the protective screen (20) is disposed between the sensor (10) and the protective shield (50); and
- the viewing window (51) is positioned such that a sensor field of view of the sensor (10) is not impaired.

8. Sensor device (1) according to one of the preceding claims, **characterized in that** the sensor device (1) has a liquid receiving device (60) for receiving and/or discharging liquid applied to the outer surface (23) of the protective screen (20) .

9. Sensor device (1) according to Claim 8, **characterized in that** the liquid receiving device (60) is arranged at a radial distance from the protective screen (20).

10. Sensor device (1) according to one of the preceding claims, **characterized in that** the sensor device (1) has a contamination sensor (70) for determining a degree of contamination of the protective screen (20).

11. Method for cleaning a protective screen (20) of a sensor device (1) having the features of one of the preceding claims, wherein the method comprises the following method steps:
- Checking (S1) an optical transmittance of the protective screen (20);
- Outputting (S2) a start signal to the drive device such that the protective screen (20) is rotated when the optical transmittance of the protective screen (20) is lower than a predetermined minimum optical transmittance;
- Checking (S3) the optical transmittance of the protective screen (20);
- Outputting (S4) a first cleaning signal such that compressed air is blown onto an outer surface (23) of the protective screen (20) when the optical transmittance of the protective screen (20) is lower than the predetermined minimum optical transmittance;
- Checking (S5) the optical transmittance of the protective screen (20);
- Outputting (S6) a second cleaning signal such that cleaning fluid is applied to an outer surface (23) of the protective screen (20) when the optical transmittance of the protective screen (20) is less than the predetermined minimum optical transmittance until the optical transmittance is greater than or equal to the minimum optical transmittance, and subsequently blowing compressed air onto the outer surface (23) of the protective screen (20); and
- Outputting (S7) a stop signal to the drive device so that the rotation of the protective screen (20) is terminated.

## Revendications

1. Dispositif de capteur (1) pour un véhicule à moteur avec
- au moins un capteur optique (10) et avec
- une vitre de protection (20) placée en amont du capteur (10) dans une direction de vision (11) du capteur (11) ;
- un dispositif de distribution de fluide (30) pour appliquer un fluide (F) sur une surface extérieure (23) de la vitre de protection (20) opposée au capteur (10) ;
- dans lequel la vitre de protection (20) est montée rotative autour d'un axe de rotation (24) et peut être mise en rotation au moyen d'un dispositif d'entraînement ;
- l'axe de rotation (24) de la vitre de protection (20) est parallèle à la direction de vision (11) du capteur (11) ; et
- en vue de dessus de la vitre de protection (20), le capteur (10) est positionné de manière décalée par rapport à l'axe de rotation (24) de la vitre de protection (20).
dans lequel le dispositif de capteur (1) est **caractérisé par** les caractéristiques suivantes :
- le dispositif de capteur (1) présente une buse d'air soufflé (40) pour souffler de l'air comprimé sur la surface extérieure (23) de la vitre de protection (20) ; et
- en vue de dessus sur la surface extérieure (23) de la vitre de protection (20), la buse d'air de soufflage (40) est située en aval du dispositif de distribution de fluide (30) dans le sens de rotation (25) de la vitre de protection (20).

2. Dispositif de capteur (1) selon la revendication 1, **caractérisé en ce qu'**en vue de dessus sur la surface extérieure (23) de la vitre de protection (20), le dispositif de distribution de fluide (30) présente une distance angulaire inférieure à 180° par rapport au capteur (10) dans le sens de rotation (25) de la vitre de protection (20).

3. Dispositif de capteur (1) selon la revendication 1 ou la revendication 2, **caractérisé par** les caractéristiques suivantes :
- le dispositif de distribution de fluide (30) présente un rail (31) qui présente une extension longitudinale (33) dans la direction radiale de la vitre de protection (20) ;
- le rail (31) présente une pluralité d'orifices de sortie (32) par lesquels le fluide (F) peut être appliqué sur la surface extérieure (23) de la vitre de protection ; et
- les ouvertures de sortie (32) sont espacées les unes des autres le long de la longueur (33) du rail (31).

4. Dispositif de capteur (1) selon l'une quelconque des revendications précédentes, **caractérisé en ce que** la buse d'air de soufflage (40) est conçue pour souffler de l'air comprimé sur une surface intérieure (21) de la vitre de protection (20) tournée vers le capteur (10) et/ou sur le capteur (10).

5. Dispositif de capteur (1) selon l'une quelconque des revendications précédentes, **caractérisé par** les caractéristiques suivantes :
- la buse d'air de soufflage (40) présente un rail (41) qui présente une extension longitudinale (43) dans la direction radiale de la vitre de protection (20) ;
- le rail (41) présente une pluralité d'orifices de sortie (42) par lesquels de l'air comprimé peut être appliqué sur la surface extérieure (23) de la vitre de protection (20) ; et
- les ouvertures de sortie (42) sont espacées les unes des autres le long de l'extension longitudinale (43) du rail (41).

6. Dispositif de capteur (1) selon l'une quelconque des revendications précédentes, **caractérisé en ce que** la vitre de protection (20) présente au moins un bossage (22) sur une surface intérieure (21) tournée vers le capteur (10).

7. Dispositif de capteur (1) selon l'une quelconque des revendications précédentes, **caractérisé par** les caractéristiques suivantes :
- le dispositif de capteur (1) comporte un écran de protection (50) comportant une fenêtre de visualisation (51) ;
- la vitre de protection (20) est disposée entre le capteur (10) et l'écran de protection (50) ; et
- la fenêtre de visualisation (51) est positionnée de manière à ce qu'un champ de vision du capteur (10) ne soit pas affecté.

8. Dispositif de capteur (1) selon l'une quelconque des revendications précédentes, **caractérisé en ce que** le dispositif de capteur (1) présente un dispositif de réception de liquide (60) pour recevoir et/ou évacuer le liquide appliqué sur la surface extérieure (23) de la vitre de protection (20).

9. Dispositif de capteur (1) selon la revendication 8, **caractérisé en ce que** le dispositif de réception de liquide (60) est disposé à une distance radiale de la vitre de protection (20).

10. Dispositif de capteur (1) selon l'une quelconque des revendications précédentes, **caractérisé en ce que** le dispositif de capteur (1) présente un capteur de salissure (70) pour déterminer un degré de salissure de la vitre de protection (20).

11. Procédé de nettoyage d'une vitre de protection (20) d'un dispositif de capteur (1) ayant les caractéristiques de l'une quelconque des revendications précédentes, le procédé comprenant les étapes de procédé suivantes :
- vérifier (S1) la perméabilité optique de la vitre de protection (20) ;
- émettre (S2) un signal de démarrage au dispositif d'entraînement, de sorte que la vitre de protection (20) est mise en rotation lorsque la perméabilité optique de la vitre de protection (20) est inférieure à une perméabilité optique minimale prédéterminée ;
- vérifier (S3) la perméabilité optique de la vitre de protection (20) ;
- émettre (S4) un premier signal de nettoyage de manière à souffler de l'air comprimé sur une surface extérieure (23) de la vitre de protection (20) lorsque la perméabilité optique de la vitre de protection (20) est inférieure à la perméabilité optique minimale prédéterminée ;
- vérifier (S5) la perméabilité optique de la vitre de protection (20) ;
- émettre (S6) un deuxième signal de nettoyage de manière à ce que le liquide de nettoyage soit appliqué sur une surface extérieure (23) de la vitre de protection (20) lorsque la perméabilité optique de la vitre de protection (20) est inférieure à la perméabilité optique minimale prédéterminée jusqu'à ce que la perméabilité optique soit supérieure ou égale à la perméabilité optique minimale, puis souffler de l'air comprimé sur la surface extérieure (23) de la vitre de protection (20) ; et
- émettre (S7) un signal d'arrêt au dispositif d'entraînement, de sorte que la rotation de la vitre de protection (20) est arrêtée.
